Europäisches Patentamt

European Patent Office

Office européen des brevets

(19)

(11) Numéro de publication: **0 047 687**
**B1**

(12) **FASCICULE DE BREVET EUROPEEN**

(45) Date de publication du fascicule du brevet:
**03.10.84**

(51) Int. Cl.³: **G 01 N 27/56**

(21) Numéro de dépôt: **81401309.0**

(22) Date de dépôt: **17.08.81**

(54) **Dispositif du type cellule électrochimique à électrolyte solide, et son procédé de fabrication.**

(30) Priorité: **05.09.80 FR 8019256**

(43) Date de publication de la demande:
**17.03.82 Bulletin 82/11**

(45) Mention de la délivrance du brevet:
**03.10.84 Bulletin 84/40**

(84) Etats contractants désignés:
**DE GB IT SE**

(56) Documents cités:
**DE - A - 2 526 340**
**DE - A - 2 650 850**
**DE - A - 2 904 069**
**US - A - 3 607 424**
**US - A - 4 210 509**

(73) Titulaire: **THOMSON-CSF, 173, Boulevard Haussmann,
F-75379 Paris Cedex 08 (FR)**

(72) Inventeur: **Croset, Michel, Thomson-CSF SCPI 173, bld
Haussmann, F-75360 Paris Cedex 08 (FR)**
Inventeur: **Velasco, Gonzalo, Thomson-CSF
SCPI 173, bld Haussmann, F-75360 Paris Cedex 08 (FR)**
Inventeur: **Schnell, Philippe, Thomson-CSF SCPI 173, bld
Haussmann, F-75360 Paris Cedex 08 (FR)**

(74) Mandataire: **Lepercque, Jean et al, THOMSON-CSF
SCPI 173, Bld Haussmann, F-75379 Paris Cedex 08 (FR)**

ACTORUM AG

## Description

La présente invention se rapporte à un dispositif du type cellule électrochimique à électrolyte solide et à son procédé de fabrication; notamment à un capteur électrochimique de concentration d'espèces dans un mélange fluide.

En effet une des familles bien connue de capteurs de composition d'espèces chimiques, par exemple de pressions partielles des espèces présentes dans un gaz, met en œuvre une cellule électrochimique du type pile à concentration. Une telle cellule comprend une première électrode dite électrode de mesure, un électrolyte solide et une seconde électrode dite électrode de référence en contact avec un milieu de référence. L'électrode de mesure est mise en contact avec le milieu à analyser, par exemple les gaz d'échappement d'un moteur à combustion interne. Ces gaz comprennent notamment de l'oxygène, du monoxyde de carbone, du gaz carbonique et différents hydrocarbures. L'électrolyte est un conducteur ionique sélectif de l'espèce à analyser.

Selon une première approche de réalisation de capteurs de l'art connu, le milieu de référence est l'air ambiant ou du moins un réservoir d'un gaz approprié. La forme la plus courante d'un tel capteur est celle dite d'un «doigt de gant», la partie centrale étant constituée par un électrolyde solide, dont les faces intérieures et extérieures sont recouvertes par des électrodes. L'intérieur du «doigt» communique en général avec l'atmosphère et l'extérieur avec le milieu à analyser. L'électrolyte devant en général assurer le maintien mécanique de l'ensemble, il s'agit d'un électrolyte épais. De tels capteurs sont couramment utilisés dans le domaine de l'électronique automobile pour la mesure de la pression partielle d'oxygène dans les gaz d'échappement. Un exemple d'un tel capteur est décrit dans le brevet français publié sous le numéro 2 224 043.

Une seconde approche de l'art connu propose l'utilisation d'un moyen combinant la fonction électrode et la fonction milieu de référence. On utilise pour ce faire une électrode à base d'une combinaison du type: «M-MX» où M est un métal et X de l'oxygène ou un halogène à détecter, par exemple «M-MO» dans le cas de la détection de l'oxygène. Dans le cas des capteurs de pression partielle d'oxygène, comme il est bien connu des équations qui régissent ces capteurs sont:
—aux interfaces électrodes-électrolytes:

$$O_2 \xrightleftharpoons{} 2O \xrightleftharpoons[]{-4e-} 2O^{-2}$$

—la différence de potentiel $\Delta V$ en volts qui se développe alors entre les électrodes est donnée par la loi de NERNST:

$$\Delta V = \frac{RT}{4F} \ln \frac{P_1}{P_2}$$

avec $R$ = constante des gaz parfaits
$= 8,314$ J(mole.K)

$F$ = nombre de Faraday = 96490 C.mole$^{-1}$
$T$ = température absolue en degrés Kelvin
$P_1$ et $P_2$ = pressions partielles dans les milieux en contact avec les deux électrodes.

Pour les applications les plus courantes de ces capteurs, et c'est le cas de la mesure de la pression partielle d'oxygène dans les gaz d'échappement, les températures de fonctionnement sont généralement supérieures à 450 °C. Dans ce cas, le temps de montée de la force électromotrice mesurée entre les électrodes en réponse à une variation de la pression partielle de l'espèce à mesurer, par exemple l'oxygène, est alors typiquement inférieur à une seconde. En dessous de cette température, le temps de réponse augmente de façon notable, ce qui limite l'utilisation de telle cellule à la mesure de phénomènes lents voire très lents. Cette dégradation des performances dynamiques de la cellule peut être attribuée à plusieurs causes: aux résistances et capacités de réaction d'électrode, à la résistance, à la conduction ionique de l'électrolyte et aux capacités du circuit électrique de mesure associé à la cellule. En effet l'impédance équivalente d'une telle cellule étant très élevée, les capacités des cables de liaisons ou de l'appareil qui mesure la force électromotrice interélectrode interviennent dans la dégradation du temps de réponse. Des valeurs typiques de ces capacités sont de l'ordre de 5 à 20pF.

Lorsqu'on descend en dessous d'une température d'environ 250 °C, l'expérience montre que c'est la première cause, c'est à dire la constante de temps des réactions d'électrodes, qui devient prépondérante dans l'allongement du temps de réponse.

Il a été d'ailleurs proposé, à titre de perfectionnement aux deux approches de réalisation de capteur précitées, de mettre en œuvre des techniques de dépôts en couches minces qui permettent d'optimiser, notamment, la résistance à la conduction ionique de l'électrolyte.

Toujours en se plaçant dans le cas de la mesure de la pression partielle d'oxygène dans un gaz, en ce qui concerne les réactions d'électrodes, plusieurs étapes peuvent être distinguées: 1°/ absorption de l'oxygène moléculaire à la surface de l'électrode de mesure; 2°/ dissociation de cet oxygène moléculaire en deux atomes d'oxygène et 3° diffusion vers les points d'échange avec l'électrolyte et 4°/ échange proprement dit. Ces phénomènes sont décrits par exemple, dans l'article de SCHOULER et autres: «Application selon BAUERLE du tracé des diagrammes d'admittance complexe en électrochimie des solides», paru dans la revue française «JOURNAL DE CHIMIE PHYSIQUE», 1973, vol 70, no 6, pages 923–935. L'expérience permet de penser que le processus d'échange est la cause la plus importante de la limitation des performances dynamiques de la cellule. La diminution du temps de réponse est ainsi conditionnée par l'augmentation des courants d'échange à l'interface électrode-électrolyte. Par exemple le document DE-A-2 904 069 propose d'améliorer le temps de réponse d'une cellule à électrolyte solide en interposant une couche à haute conductivité ionique entre cet électrolyte et une électrode conductrice.

L'invention se propose de répondre à ce besoin.

L'invention a pour objet un dispositif du type cellule électrochimique dont deux variantes sont definies dans les revendications 1 et 3 respectivement. L'invention a encore pour objet un procédé de fabrication intervenant dans chacune des variantes du dispositif définies dans les revendications 1 et 3 (voir revendications 5 et 9 respectivement).

L'invention sera mieux comprise et d'autres avantages apparaitront à la lecture de la description ci-après en se référant aux dessins annexés parmi lesquels:

–les figures 1 à 4 sont des diagrammes explicatifs des phénomènes mis en jeu dans l'invention;

–la figure 5 est un exemple de capteur électrochimique réalisé conformément à une première variante de l'invention;

–la figure 6 est un diagramme comparant le temps de réponse d'un capteur de l'art connu avec ceux d'un capteur réalisé conformément à l'enseignement de l'invention;

–la figure 7 est un exemple de capteur électrochimique réalisé conformément à une seconde variante de l'invention.

Dans ce qui suit, à titre d'illustration, l'invention sera décrite dans le cadre de la mesure des con entrations relatives d'espèces réactives dans un mélange fluide, ce sans entrainer aucune limitation dans la portée de la présente invention.

Plus précisément, si on se place dans le cadre de la détection de l'oxygène dans les gaz d'échappement d'un moteur à combustion interne, un exemple typique d'électrolyte solide conducteur de l'oxygène sous forme ionique est la zircone stabilisée au calcium de formule:

$$(ZrO_2)_{1-x} (CaO)_x \text{ avec } 0,07 \leq x \leq 0,20.$$

Les valeurs précitées de $x$ sont généralement admises par les différents auteurs d'articles scientifiques dans ce domaine et correspondent à une phase cristalline cubique de la zircone. Le réseau maillé présente des lacunes acceptrices d'ions d'oxygène $O^-$ et la zircone ainsi dopée est de ce fait conductrice ionique de l'oxygène. La conductivité ionique augmente avec la concentration de dopants jusqu'à $(ZrO_2)_{0,85} (CaO)_{0,15}$ mais décroit au-delà de cette composition, cette décroissance étant due à des mécanismes encore mal connus. Un dopage correspondant à la valeur $x=0,15$ permet donc une optimisation de la conduction ionique. Cependant, comme il a été rappelé, le temps de réponse est ralenti par la difficulté des échanges ioniques à l'interface «électrolyte solide-milieu extérieur».

Dans le cas présent, ce milieu extérieur peut être constitué par une électrode en platine au sein de laquelle se dissocie l'oxygène moléculaire pour produire des ions oxygènes. Le temps de réponse, lorsqu'un tel capteur est utilisé à de hautes températures ($>400$ °C), est suffisamment court pour la plupart des applications. Il est inférieur à une seconde. Si on désire utiliser de tels capteurs à plus basse température, ce temps de réponse augmente notablement et limite l'application de ces capteurs à des phénomènes lents ou très lents.

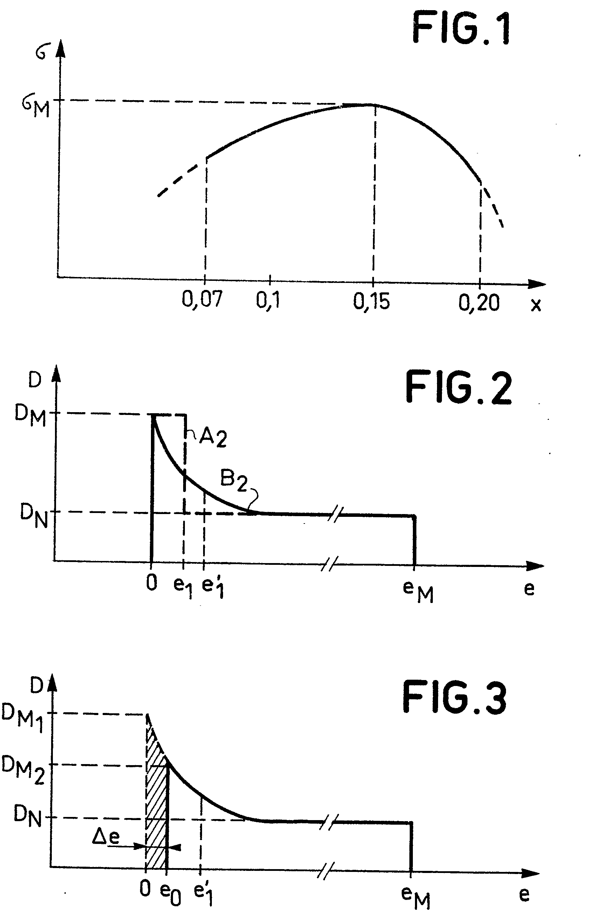

La figure 1 illustre la variation de la conductivité ionique $\sigma$ en fonction de $x$ cette conductivité passant par un maximum $\sigma_M$ pour la valeur $x=0,15$. Le livre britannique édité par J. HLADIK «Physics of Electrolytes» volume 2: «Thermodynamics and Electrode Processes in Solid State Electrolytes» (Academic Press; Londres), étudie notamment ces phénomènes.

Bien que cette valeur $x=0,15$, généralement adoptée, permette l'optimisation de la conduction ionique, cette valeur n'est cependant pas optimale pour les échanges qui se produisent à l'interface «électrolyte solide-milieu extérieur». Ces échanges seraient facilités par une densité de lacunes d'oxygènes plus grande, donc une plus grande concentration en oxyde de calcium.

Pour optimiser simultanément ces deux paramètres, l'invention propose d'utiliser des électrolytes solides comportant au moins deux régions: –une première région constituant la plus grande partie de l'électrolyte et dont le dopage optimise la conduction ionique, ce dopage étant appelé dans ce qui suit dopage normal $D_N$, et une seconde région superficielle de faible épaisseur surdopée destinée à favoriser les échanges ioniques à l'interface. De façon idéale cette seconde région devrait avoir une épaisseur correspondant à quelques couches atomiques. Le dopage maximal est $D_M$.

La figure 2 illustre par la courbe $A_2$ la variation idéale du dopage en fonction de l'épaisseur $e$ de l'électrolyte. L'épaisseur de l'électrolyte varie entre les valeurs 0 et $e_M$, la zone superficielle variant pour sa part entre les valeurs 0 et $e_1$. Dans la réalité, les procédés pouvant être utilisés pour obtenir ce surdopage ne permettent pas d'obtenir cette courbe idéale. Tous les procédés de fabrication généralement utilisés dans le domaine de la microélectronique peuvent être mis en oeuvre dans le cadre de l'invention, par exemple les procédés de diffusion ou d'implantation ionique. La courbe $B_2$ représente un profil typique de la variation superficielle du dopage de l'électrolyte. Il s'en suit que la zone surdopée a une épaisseur équivalente à $e'_1$ plus grande que la valeur théorique $e_1$.

Si on désire se rapprocher des conditions idéales, plusieurs procédés peuvent être mis en œuvre. La figure 3 illustre un premier procédé. Après la phase consistant en un surdopage de la région superficielle de l'électrolyte sur une profondeur $e'_1$, l'électrolyte est érodé par exemple par attaque chimique de façon à retirer une couche $\Delta e$ de matériau. Il s'en suit que la zone surdopée n'a plus qu'une épaisseur égale à $e_0-e'_1$. Le dopage maximal passe de la valeur $D_{M1}$ à la valeur $D_{M2}$, légèrement inférieure.

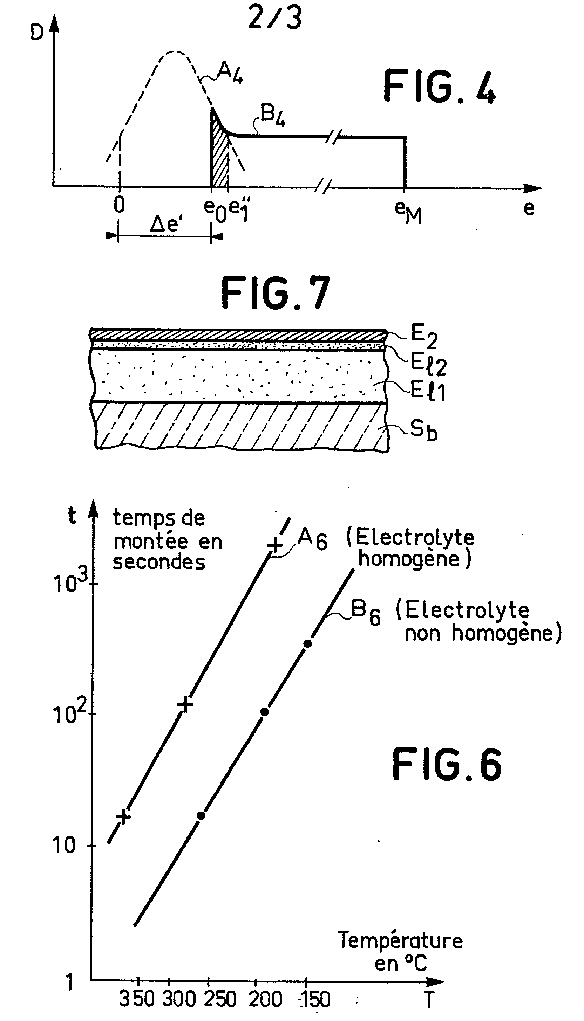

Un autre procédé consiste à recouvrir l'électrolyte d'une couche d'un autre matériau plus facilement attaquable que le matériau constituant l'électrolyte. Il peut s'agir dans le cas de la zircone d'une mince couche de métal tel que l'argent, ou d'un oxyde tel que l'oxyde de niobium ($Nb_2O_5$) ou de silicium ($SiO_2$). Ces oxydes peuvent être attaqués par l'acide fluorhydrique. Dans ce cas le surdopage sera réalisé par implantation ionique. Sur la figure 4, la courbe $A_4$ représente le profil de variation du dopage en forme de courbe de GAUSS obtenu par implantation ionique. L'épaisseur de la couche de matériau déposée sur l'électrolyte est égale à $\Delta e'$. Le surdopage s'étend dans l'électrolyte lui-même sur une profondeur égale sensiblement à $e_0-e_1''$. Une fois le dopage réalisé, la couche de matériau superficielle est enlevée par attaque chimique et la région surdopée se réduit à une région de l'électrolyte de profondeur $e_0-e_1''$. L'énergie communiquée aux ions de calcium dépend de l'épaisseur de la couche déposée $\Delta e'$ qui peut varier entre quelques centaines d'angströms à quelques milliers d'angströms. Les énergies correspondantes varieront typiquement dans la gamme 10 à 400 KeV. Un autre moyen de diminuer l'épaisseur de la couche surdopée est l'érosion ionique, l'attaque par plasma après implantation, ou encore l'érosion simultanée à l'implantation réalisée à faible énergie ($< 30$ KeV).

Enfin le surdopage peut être également obtenu par dépôt d'une couche superficielle de zircone fortement dopée par évaporation sous vide, pulvérisation cathodique ou toutes autres méthodes adaptées.

L'épaisseur du dépôt peut être de l'ordre de 50 Å. Dans ce cas, le matériau déposé et le dopant peuvent être différents de ceux de la première région de l'électrolyte.

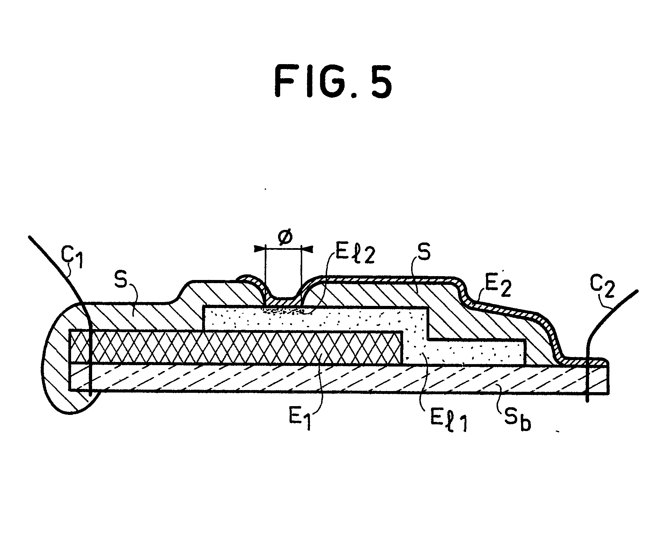

Pour illustrer la première variante du dispositif suivant l'invention, un capteur électrochimique mesurant les concentrations relatives d'oxygène dans un gaz va maintenant être décrit en relation avec la figure 5. Ce capteur, réalisé conformément à la présente invention, a une structure générale du type de celle décrite notamment dans la demande de Brevet Européen publiée sous le numéro 12 647. Sur un substrat $S_b$ isolant, en alumine monocristalline par exemple, assurant la tenue mécanique de l'ensemble, ont été déposées par pulvérisation cathodique, une électrode de référence $E_1$ du type «nickel-oxyde de nickel», d'épaisseur 1 µm en forme de languette et une bande constituée par de la zircone stabilisée de composition $(ZrO_2)_{0,85}$ $(CaO)_{0,15}$, d'épaisseur 1 µm, chevauchant partiellement l'électrode de référence $E_1$. Le contact électrique avec l'électrode en «nickel-oxyde de nickel» est réalisé à l'aide d'un fil de platine $C_1$. Pour éviter l'oxydation du nickel par contact avec le milieu extérieur dans lesquels circulent les gaz à analyser, un enrobage d'émail S protège toute la structure à l'exception d'une zone circulaire $\varnothing$ de surface 0,1 $mm^2$ environ. Par implantation ionique, une dose d'environ 2,6 $10^{16}$ atomes de calcium par $cm^2$ sous une énergie de 30 KeV, a été implantée dans l'électrolyte $E_{11}$ pour former une région superficielle $E_{12}$ d'électrolyte surdopée. L'implantation ionique est suivie d'un traitement thermique de 10 mn à 800 °C à l'air. Suite à ce traitement, il se forme une région surdopée de l'électrolyte de composition approximative $(ZrO_2)_{0,70}$ $(CaO)_{0,30}$ sur une profondeur d'environ 300 Å.

Une fine couche de laque de platine est déposée sur la surface restée libre de la zircone ainsi que sur une partie de l'émail S, pour constituer l'électrode de mesure $E_2$. Un second fil de platine constitue un second contact électrique $C_2$. Le potentiel inter-électrode est recueilli entre ces deux conducteurs et les signaux ainsi recueillis sont transmis à des circuits électroniques non représentés. Ces circuits ne diffèrent en rien de l'art connu.

Cette structure est conforme aux enseignements de la demande de Brevet Européen précitée sauf en ce qui concerne la création de la zone d'électrolyte surdopée $E_{12}$, conformément à la présente invention.

Une seconde cellule de même type que celle qui vient d'être décrite mais ne comportant pas cette zone $E_{12}$ surdopée a été réalisée.

Les temps de montée de la force électromotrice inter-électrode de ces cellules en réponse à un échelon de variation de pression partielle de l'oxygène ont été comparées. Les résultats sont rassemblés sur le diagramme de la figure 6 pour ces températures comprises entre 150 et 350 °C, tous autres paramètres restant identiques.

Le temps de montée est défini de façon conventionnelle comme étant le temps mis pour passer de 10 à 90% de la différence entre l'ancienne et nouvelle valeur de la force électromotrice inter-électrode.

La courbe $A_6$ concerne un capteur à électrolyte homogène et la courbe $B_6$ un capteur à électrolyte non homogène, c'est à dire conforme aux enseignements de l'invention. Les temps de montée de ces derniers capteurs sont dix fois plus courts que ceux d'un capteur à électrolyte homogène.

Outre la zircone, d'autres matériaux conviennent pour la réalisation des deux régions de l'électrolyte, ainsi que divers procédés d'obtention. A titre d'exemples non limitatifs, les matériaux rassemblés dans le tableau placé en fin de la présente description sont utilisables. Les matériaux dopant sont des éléments des colonnes IIA et IIIB du tableau périodique.

Il est à noter qu'à chaque couple «matériau principal-dopant» correspond un pourcentage de dopage spécifique apte à optimiser la conduction ionique dans la région $E_{11}$ de l'électrolyte.

L'invention n'est pas non plus limitée aux électrolytes solides, conducteurs ioniques de l'oxygène, mais également à tous électrolytes conducteurs ioniques d'un halogène. Un exemple d'un tel halogène est le fluor. Dans ce cas le matériau principal peut être du fluorure de plomb ($Pb F_2$) ou une association fluorure de plomb/fluorure d'étain ($Pb$ ($PB F_2/Sn F_2$), ou encore les matériaux de formules chimiques: $Sr F_2$, $Ba F_2$, $Sr Br_2$, $Ca F_2$, $BaCl_2$. Le matériau dopant est un élément alcalin.

Selon une seconde variante du dispositif suivant l'invention, il est possible d'augmenter les courants d'échanges ioniques à l'interface «électrolyte solide-milieu extérieur» non pas en surdo- pant superficiellement l'électrolyte solide, mais en déposant sur celui-ci une couche mince d'un second matériau également dopé.

En effet, si on se replace dans le cas de la détection d'oxygène comme précédemment décrit, le travail de sortie d'un atome d'oxygène vers le milieu extérieur (électrode $E_2$) est grand. Par suite, seul un petit nombre d'atomes d'oxygène du réseau de la zircone seront dotés de suffisamment d'énergie pour échapper au réseau et participer aux courants d'échanges.

Par contre, si on considère la cérine dopée à l'yttrium de composition: $(CeO_2)_{0,97}$ $(Y_2O_3)_{0,03}$, le travail de sortie d'un atome d'oxygène est beaucoup plus faible, d'où un courant d'échange plus grand avec le milieu extérieur.

Suivant la seconde variante du dispositif selon l'invention, on crée une seconde région $E_{12}$ superficielle de l'électrolyte, en déposant une mince couche sur la première région $E_{11}$, les matériaux de ces deux régions étant différents et le travail de sortie du matériau de la seconde région pour une espèce à détecter doit être plus faible que pour celui de la première région $E_{11}$.

La figure 7 décrit schématiquement un capteur réalisé conformément à la seconde variante de l'invention. On retrouve les différents éléments déjà décrits: le susbstrat $S_b$ et la première région de l'électrolyte $E_{11}$. Conformément à la seconde variante, la seconde région de l'électrolyte $E_{12}$ est formée d'une couche mince d'un matériau dopé, formant également électrolyte solide. Enfin on retrouve l'électrode de mesure $E_2$. L'électrode de référence $E_1$ n'a pas été représentée sur cette figure.

En ce qui concerne le dépôt de la couche mince formant la seconde région $E_{12}$ de l'électrolyte, les méthodes généralement utilisées pour la fabrication des circuits intégrés conviennent. A titre d'exemple, le dépôt peut être obtenu par évaporation sous vide ou par pulvérisation cathodique.

Si le procédé utilisé est trop rapide pour obtenir une couche suffisamment mince, le procédé décrit en relation avec la figure 3 peut à nouveau être utilisé. De façon préférentielle, la seconde zone a une épaisseur inférieure à 400 Å.

Le dépôt peut n'avoir lieu que dans certaines zones de la surface de l'électrolyte principal $E_{11}$. Dans ce cas, on recourt aux techniques de masquages, bien connues de l'homme de métier.

L'invention n'est pas limitée aux seuls exemples de réalisation qui viennent d'être décrits à titre d'illustration.

On peut notamment créer une troisième région par surdopage de l'électrolyte principal $E_{11}$ ou dépôt d'une couche mince, dans la zone de contact «électrolyte-seconde électrode». C'est notamment nécessaire lorsque cette électrode n'est pas une électrode du type précédemment décrit «M-MX», combinant les fonctions électrode et milieu de référence.

Enfin l'invention s'applique à des dispositifs autres que les capteurs électrochimiques, tels que les dispositifs de production ou de stockage de l'énergie électrique à électrolyte solide.

Tableau

Electrolyte solide:
Région $E_{11}$:

matériau principal: $ZrO_2$; $CeO_2$, $HfO_2$, $ThO_2$
dopant: $CaO$, $Yb_2O_3$, $Sc_2O_3$, $Y_2O_3$, $Gd_2O_3$, $Nd_2O_3$, $La_2O_3$

procédé de réalisation: frittage, évaporation, pulvérisation, implantation,...

Couche superficielle
Région $E_{12}$:

matériau principal: $ZrO_2$, $CeO_2$, $HfO_2$, $ThO_2$
dopant: $CaO$, $Yb_2O_3$, $Sc_2O_3$, $Y_2O_3$, $Gd_2O_3$, $Nd_2O_3$, $La_2O_3$

procédé de réalisation: frittage, évaporation, pulvérisation, implantation

## Revendications

1. Dispositif du type cellule électrochimique comportant un électrolyte solide ayant la structure d'un réseau cristallin constitué par un matériau dopé de façon à créer des lacunes dans le réseau; l'électrolyte étant conducteur ionique exclusif d'une espèce chimique déterminée et en contact avec deux électrodes conductrices; dispositif caractérisé en ce que l'électrolyte comprend une première région ($EI_2$) présentant un premier pourcentage de dopage ($D_N$) et une seconde région superficielle ($EI_2$) présentant un second pourcentage de dopage ($D_M$); seconde région ($EI_2$) de faible épaisseur comparée à l'épaisseur de la première région et recouvrant au moins la surface de la première région sous-jacente à au moins l'une des électrodes ($E_2$) et le second pourcentage ($D_M$) étant choisi supérieur au premier ($D_N$) de façon à augmenter le nombre de lacunes créés dans le réseau et à augmenter les courants d'échanges ioniques à l'interface entre l'électrolyte solide et le milieu extérieur à cet électrolyte solide.

2. Dispositif selon la revendication 1, caractérisé en ce que le matériau est choisi parmi les suivants: zircone, thorine ou cerine, dopés à un ou plusieurs éléments des colonnes IIA et IIIB du tableau périodique et l'espèce chimique déterminées est l'oxygène.

3. Dispositif du type cellule électrochimique comportant un électrolyte solide ayant la structure d'un réseau cristallin constitué par des matériaux dopés de façon à créer des lacunes dans le réseau; l'électrolyte étant conducteur ionique d'une espèce chimique déterminée et en contact avec deux électrodes conductrices; dispositif caractérisé en ce que l'électrolyte comprend une première région ($EI_1$ en un premier matériau dopé et une seconde région ($E_{I7}$) en un second matériau dopé, seconde région ($EI_2$) de faible épaisseur comparée à l'épaisseur de la première région et recouvrant au moins la surface de la première région sous-jacente à au moins l'une des électrodes ($E_2$); le second matériau étant choisi pour que le travail de sortie que doit fournir un atome de l'espèce chimique déterminée soit plus faible que celui que doit fournir un atome de cette espèce pour le premier matériau et à augmenter les courants d'échanges ioniques à l'interface entre l'électrode solide et le milieu extérieur à cet électrolyte solide.

4. Dispositif selon la revendication 3, caractérisé en ce que le premier matériau est de la zircone dopée par du calcium et le second matériau de l'oxyde de cerium dopé par de l'ytrium; l'espèce chimique déterminée étant l'oxygène.

5. Procédé de fabrication de la seconde région ($El_2$) du dispositif selon la revendication 1, caractérisé en ce qu'il comprend une étape pendant laquelle le pourcentage de dopage ($D_N$) de l'électrolyte est augmentée dans une région superficielle de l'électrolyte pour créer la seconde région ($El_2$) de l'électrolyte; seconde région ($El_2$) recouvrant au moins la surface de l'électrolyte en contact avec au moins une des électrodes ($E_2$).

6. Procédé selon la revendication 5, caractérisé en ce que l'augmentation du pourcentage de dopage est réalisé par implantation ionique d'un corps dopant.

7. Procédé selon la revendication 6, caractérisé en ce que ladite étape est précédée d'une étape préliminaire pendant laquelle une couche mince d'un matériau déterminé est déposée sur les zones de l'électrolyte dans lesquelles doit être formée la seconde région ($El_2$) l'implantation ionique s'effectuant au travers de la couche de matériau déposée; et en ce que ladite étape est suivie d'une autre étape pendant laquelle la couche mince de matériau déterminé est enlevée par attaque chimique, usinage ionique ou attaque par plasma.

8. Procédé selon la revendication 5, caractérisé en ce que l'augmentation du pourcentage du dopage est réalisé par dépôt d'une couche mince de matériau sur les zones de l'électrolyte dans lesquelles doit être formée la seconde région ($El_2$) et en ce que le dépôt s'effectue par évaporation sous vide ou pulvérisation cathodique.

9. Procédé de fabrication de la seconde région ($El_2$) du dispositif selon la revendication 3, caractérisé en ce que, la première région ($El_1$) étant formée d'un premier matériau dopé, il comprend une étape pendant laquelle une couche mince d'un second matériau dopé est déposée sur le premier matériau pour créer la seconde région de l'électrolyte ($El_2$); seconde région recouvrant au moins la surface de l'électrolyte en contact avec au moins une des électrodes ($E_2$).

10. Procédé selon la revendication 9, caractérisé en ce que le dépôt est effectué par pulvérisation cathodique ou évaporation sous vide.

11. Procédé selon l'une quelconque des revendications 6, 8 ou 9, caractérisé en ce que ladite étape est suivie d'une autre étape pendant laquelle l'électrolyte subit une attaque chimique de façon à réduire l'épaisseur de la seconde région ($El_2$), un usinage ionique ou une attaque par plasma.

**Patentansprüche**

1. Vorrichtung vom Typ elektrochemische Zelle mit einem Festkörper-Elektrolyten, der die Struktur eines aus einem derart dotiertem Material bestehenden kristallinen Netzes, dass Fehlstellen in dem Netz entstehen, aufweist, wobei der Elektrolyt ein reiner Ionenleiter eines bestimmten chemischen Stoffs ist und mit zwei leitenden Elektroden in Kontakt steht, dadurch gekennzeichnet, dass der Elektrolyt einen ersten Bereich ($El_1$) mit einem ersten Dotierprozentsatz ($D_N$) und einen zweiten, oberflächlichen Bereich ($El_2$) mit einem zweiten Dotierprozentsatz ($D_M$) aufweist, wobei der zweite Bereich ($El_2$) eine geringe Dicke im Vergleich zur Dicke des ersten Bereichs besitzt und mindestens die Oberfläche des ersten Bereichs besitzt und mindestens die Oberfläche des ersten Bereichs unterhalb mindestens einer der Elektroden ($E_2$) bedeckt und der zweite Prozentsatz ($D_M$) höher gewählt ist als der erste ($D_N$), um die Zahl der im Netz gebildeten Fehlstellen zu vergrössern und die Ionenaustauschströme im Übergang zwischen dem Festkörper-Elektrolyten und dem Milieu ausserhalb des Festkörper-Elektrolyten zu erhöhen.

2. Vorrichtung nach Anspruch 1, dadurch gekennzeichnet, dass das Material aus den Materialien Zirkon, Thorin und Cerin ausgewählt wird, die mit einem oder mehreren Elementen der Spalten IIA und IIIB des Periodischen Systems dotiert sind, und der bestimmte chemische Stoff Sauerstoff ist.

3. Vorrichtung vom Typ elektrochemische Zelle mit einem Festkörper-Elektrolyten, der die Struktur eines aus derart dotierten Materialien bestehenden kristallinen Netzes aufweist, dass Fehlstellen in dem Netz entstehen, wobei der Elektrolyt ein Ionenleiter eines bestimmten chemischen Stoffs ist und mit zwei leitenden Elektroden in Kontakt steht, dadurch gekennzeichnet, dass der Elektrolyt einen ersten Bereich ($El_1$) aus einem ersten dotierten Material und einen zweiten Bereich ($El_2$) aus einem zweiten dotierten Material aufweist, wobei der zweite Bereich ($El_2$) eine geringe Dicke im Vergleich zur Dicke des ersten Bereichs besitzt und mindestens die Oberfläche des ersten Bereichs unterhalb mindestens einer der Elektroden ($E_2$) bedeckt, wobei das zweite Material so gewählt ist, dass die Austrittsarbeit, die ein Atom des bestimmten chemischen Stoffs liefern muss, geringer ist als die Arbeit, die ein Atom dieses Stoffs für das erste Material liefern muss, und die Ionenaustauschströme im Übergang zwischen dem Festkörper-Elektrolyten und dem Milieu ausserhalb dieses Festkörper-Elektrolyten erhöht werden.

4. Vorrichtung nach Anspruch 3, dadurch gekennzeichnet, dass das erste Material mit Calcium dotiertes Zirkon und das zweite Material mit Yttrium dotiertes Ceriumoxid ist, wobei der bestimmte chemische Stoff Sauerstoff ist.

5. Verfahren zur Herstellung des zweiten Bereichs ($El_2$) der Vorrichtung nach Anspruch 1, dadurch gekennzeichnet, dass es einen Verfahrensschritt aufweist, während dem der Dotierprozentsatz ($D_N$) des Elektrolyten in einem Oberflächenbereich des Elektrolyten erhöht wird, um den zweiten Bereich ($El_2$) des Elektrolyten zu bilden, wobei der zweite Bereich ($El_2$) mindestens die Oberfläche des Elektrolyten bedeckt, die in Kontakt mit mindestens einer der Elektroden ($E_2$) steht.

6. Verfahren nach Anspruch 5, dadurch gekennzeichnet, dass die Erhöhung des Dotierprozentsatzes durch ionische Implantierung eines dotierenden Körpers erhalten wird.

7. Verfahren nach Anspruch 6, dadurch gekennzeichnet, dass diesem Verfahrensschritt eine Vorstufe vorausgeht, während der eine dünne Schicht eines bestimmten Materials auf die Zonen des Elektrolyten aufgebracht wird, in denen der zweite Bereich ($El_2$) gebildet werden soll, wobei die ionische Implantierung durch die aufgebrachte Materialschicht hindurch erfolgt, und dass der Verfahrensschritt von einem anderen Schritt gefolgt wird, während dem die dünne Schicht bestimmten Materials durch chemischen Angriff, ionische Bearbeitung oder Plasmabeschuss entfernt wird.

8. Verfahren nach Anspruch 5, dadurch gekennzeichnet, dass die Erhöhung des Dotierprozentsatzes durch Aufbringen einer dünnen Materialschicht auf die Zonen des Elektrolyten erfolgt, in denen der zweite Bereich ($El_2$) gebildet werden soll, und dass das Aufbringen durch Aufdampfen unter Vakuum oder Kathodenzerstäubung geschieht.

9. Verfahren zur Herstellung des zweiten Bereichs ($El_2$) der Vorrichtung nach Anspruch 3, dadurch gekennzeichnet, dass, sofern der erste Bereich ($El_1$) aus einem ersten dotierten Material besteht, das Verfahren einen Verfahrensschritt aufweist, während dem eine dünne Schicht eines zweiten dotierten Materials auf das erste Material aufgebracht wird, um den zweiten Bereich des Elektrolyten ($El_2$) zu bilden, wobei der zweite Bereich mindestens die Oberfläche des Elektrolyten in Kontakt mit mindestens einer der Elektroden ($E_2$) bedeckt.

10. Verfahren nach Anspruch 9, dadurch gekennzeichnet, dass das Aufbringen durch Kathodenzerstäubung oder Aufdampfen unter Vakuum erfolgt.

11. Verfahren nach einem beliebigen der Ansprüche 6, 8 oder 9, dadurch gekennzeichnet, dass dieser Verfahrensschritt von einem anderen Schritt gefolgt wird, während dem der Elektrolyt einem chemischen Angriff unterworfen wird, um die Dicke des zweiten Bereichs ($El_2$) zu verringern, nämlich einer ionischen Bearbeitung oder einem Plasmabeschuss.

## Claims

1. A device of the electrochemical cell type having a solid state electrolyte of a cristal lattice structure consisting of a doped material such that holes are created in the lattice, the electrolyte being an exclusive ion conductor of a predetermined chemical nature and being in contact with two conducting electrodes, characterized in that the electrolyte comprises a first region ($El_1$) having a first doping factor ($D_N$), and a second, superficial region ($El_2$) having a second doping factor ($D_M$), this second region presenting a small thickness with respect to the first region and covering at least the surface of the first region under at least one of the electrodes ($E_2$), and the second doping factor ($D_M$) being higher than the first one ($D_N$) in order to increase the number of holes created in the lattice and to increase the ionic exchange currents at the interface between the solid state electrolyte and the medium outside that solid state electrolyte.

2. A device according to claim 1, characterized in that the material is selected from among zircon, thorine and cerine, which are doped with one or several elements of the columns IIA and IIIB of the Periodical Table, and that the chemical nature is oxygene.

3. A device of the electrochemical cell type having a solid state electrolyte of a cristal lattice structure consisting of doped materials such that holes are created in the lattice, the electrolyte being a ionic conductor of a predetermined chemical nature and being in contact with two conducting electrodes, characterized in that the electrolyte comprises a first region ($El_1$) made of a first doped material and a second region ($El_2$) made of a second doped material, this second region ($El_2$) presenting a small thickness with respect to the thickness of the first region and covering at least the surface of the first region under at least one of the electrodes ($E_2$), the second material being chosen such that the work function which an atom of the predetermined chemical kind has to furnish is smaller than the work function which an atom of said kind has to furnish for the first material, and that the ionic exchange currents at the interface between the solid state electrolyte and the medium outside that solid state electrolyte are increased.

4. A device according to claim 3, characterized in that the first material is made of zircon which is doped with calcium, whereas the second material is made of cerium oxide which is doped with ytrium, the predetermined chemical nature being oxygene.

5. A method of manufacturing the second region ($El_2$) of the device according to claim 1, characterized in that it includes a step during which the doping factor ($D_N$) of the electrolyte is increased in a superficial electrolyte region in order to create the second electrolyte region ($El_2$) this region covering at least the electrolyte surface which is in contact with at least one of the electrodes ($E_2$).

6. A method according to claim 5, characterized in that the increase of the doping factor is made by the ionic implantation of a doping component.

7. A method according to claim 6, characterized in that said step is preceded by a preliminary step, during which a thin layer of a predetermined material is deposited on the electrolyte zones in which the second region ($El_2$) is to be created, the ionic implantation being effected through the layer of deposited material, and that said step is followed by a further step during which the thin layer of predetermined material is withdrawn by chemical attack, ionic treatment of by a plasma attack.

8. A method according to claim 5, characterized in that the increase of the doping factor is obtained by depositing a thin layer of material on the electrolyte zones, in which the second region ($El_2$) is to be created, and that the depositing is effected by evaporation under vacuum or by cathode sputtering.

9. A method for manufacturing the second region ($El_2$) of the device according to claim 3, characterized in that, the first region ($El_1$) being made of a first doped material, the method includes a step during which a thin layer of a second doped material is deposited on the first material in order to create the second electrolyte region ($El_2$), this second region covering at least the electrolyte surface which is in contact with at least one of the electrodes ($E_2$).

10. A method according to claim 9, characterized in that the depositing is effected by cathode sputtering or by evaporation under vacuum.

11. A method according to any one of the claims 6, 8 or 9, characterized in that said step is followed by a further step during which the electrolyte is submitted to a chemical attack, such as a ionic treatment or an attack by plasma, in order to reduce the thickness of the second region ($El_2$).

FIG.1

FIG.2

FIG.3

FIG. 4

FIG. 7

$E_2$
$E\ell2$
$E\ell1$
$S_b$

$t$
temps de montée en secondes

$10^3$

$10^2$

$A_6$ (Electrolyte homogène)

$B_6$ (Electrolyte non homogène)

10

FIG. 6

1

350  300  250  200  150

Température en °C

$T$

11

# FIG. 5